# EUROPEAN PATENT APPLICATION

(11) **EP 4 683 159 A1**
(43) Date of publication of application: **21.01.2026**
(21) Application number: 24770770.6
(22) Date of filing: 08.03.2024
(51) Int. Cl.: H02J 7/00, H01M 50/244

(54) **HOLDING DEVICE**

(30) Priority: 14.03.2023 JP 2023039313
(71) Applicant: HONDA MOTOR CO., LTD., Tokyo 105-8404 (JP)
(72) Inventor: HIRANUMA, Junji, Wako-shi, Saitama 351-0193 (JP); GODA, Ryuki, Wako-shi, Saitama 351-0193 (JP)
(74) Representative: Weickmann & Weickmann PartmbB
(86) International application number: PCT/JP2024/009044
(87) International publication number: WO 2024/190664

(57) **Abstract**

The holding apparatus (1) includes a holding portion (2), which detachably holds a storage device (10) along an attaching and detaching direction (V1) which intersects a vertical direction. The holding portion (2) includes: a first portion (31) having a first surface (31a) which faces the vertical direction; a second portion (32) having a second surface (32a) which faces a horizontal direction; a pair of third portions (202) each having a third surface (202a) extending in a direction which intersects the first surface (31a) and the second surface (32a); and a fourth portion (203) having a fourth surface (203a) extending along the first surface (31a) at a position which faces the first portion (31). The first portion (31) and the fourth portion (203) extend from the second portion (32) in the attaching and detaching direction (V1). A length (203L) of the fourth portion (203) in the attaching and detaching direction is shorter than a length (31L) of the first portion (31) in the attaching and detaching direction.

## Description

### TECHNICAL FIELD

The present invention relates to a holding apparatus.

Priority is claimed on based on Japanese Patent Application No. 2023-039313, filed March 14, 2023, the content of which is incorporated herein by reference.

### BACKGROUND ART

For example, Patent Document 1 discloses a charger including a tray on which a battery is placed. The tray includes a bottom surface portion formed along a length direction of the battery in a state of being placed on the charger, a receiving surface portion that receives a bottom portion of the battery, and a pair of left and right side surface portions that respectively face side surfaces in a width direction of the battery. The receiving surface portion and the pair of left and right side surface portions rise from the bottom surface portion along a height direction of the battery in the state of being placed on the charger.

### Citation List

### Patent Document

Patent Document 1: PCT International Publication No. WO 2021/059685

### SUMMARY OF INVENTION

### Technical Problem

There is a concern, however, that the battery might be damaged when it is inserted into the tray, depending on the size relationship of dimensions or spaces of the respective units that constitute the tray. Hence, there is a demand for suppressing damage of a storage device, when the storage device is inserted.

In order to solve the above problem, an object of the present application is to suppress damage of a storage device, when the storage device is inserted.

### Solution to Problem

As a means for solving the above problem, according to aspects of the present invention, following constitutions are included.
(1) A holding apparatus (for example, a holding apparatus 1 in an embodiment) according to one aspect of the present invention includes a holding portion (for example, a holding portion 2 in an embodiment) which detachably hold a storage device (a storage device 10 in an embodiment) along an attaching and detaching direction (for example, an attaching and detaching direction V1 in an embodiment) which intersects a vertical direction, in which the holding portion includes: a first portion (for example, a first portion 31 in an embodiment) having a first surface (for example, a first surface 31a in an embodiment) which faces the vertical direction; a second portion (for example, a second portion 32 in an embodiment) having a second surface (for example, a second surface 32a in an embodiment) which faces a horizontal direction; a pair of third portions (for example, third portions 201 and 202 in an embodiment) each having a third surface (for example, third surfaces 201a and 202a in an embodiment) extending in a direction which intersects the first surface and the second surface; and a fourth portion (for example, a fourth portion 203 in an embodiment) having a fourth surface (for example, a fourth surface 203a in an embodiment) extending along the first surface at a position which faces the first portion, in which the first portion and the fourth portion extend in the attaching and detaching direction from the second portion, and the length of the fourth portion in the attaching and detaching direction (for example, a length 203L of the fourth portion in the attaching and detaching direction in an embodiment) is shorter than the length of the first portion in the attaching and detaching direction (for example, a length 31L of the first portion in the attaching and detaching direction in an embodiment).
(2) In the holding apparatus described in the above (1), an interval on the other end which is an opposite side of the second portion in the pair of third portions (for example, an interval R2 in a left-right direction on a front end of the pair of third portions in an embodiment) may be larger than an interval on one end which is a second portion side in the pair of third portions (for example, an interval R1 in the left-right direction on a rear end of the pair of third portions in an embodiment).
(3) In the holding apparatus described in the above (2), at least one of the pair of third portions may include, at a position on the other end, a protrusion portion (for example, a front protrusion portion 210 in an embodiment) which protrudes toward a side of an other of the pair of third portions.
(4) In the holding apparatus described in one of the above (1) to (3), the length in a direction which intersects the first surface and the fourth surface on an opposite side of the second portion in the pair of third portions (for example, a length H2 in an up-down direction on the front end of the pair of third portions in an embodiment) may be shorter than the length in a direction which intersects the first surface and the fourth surface on a second portion side in the pair of third portions (for example, a length H1 in the up-down direction on the rear end of the pair of third portions in an embodiment).
(5) The holding apparatus described in one of the above (1) to (4) may further include a second terminal (for example, a second terminal 35 in an embodiment) attachable to and detachable from a first terminal (for example, a first terminal 18 in an embodiment) provided on the storage device, in which the first terminal may be attached to and detached from the second terminal, in the storage device being attached to and detached from the holding portion.

### Advantageous Effects of Invention

According to the holding apparatus described in the above (1) of the present invention, the length of the fourth portion in the attaching and detaching direction is shorter than the length of the first portion in the attaching and detaching direction, and thus the storage device is allowed to be moved also in the direction (for example, the up-down direction) that intersects the attaching and detaching direction and the horizontal direction while performing the operation of attaching and detaching the storage device. Therefore, it becomes possible to suppress damage of the storage device, when the storage device is inserted.

According to the holding apparatus described in the above (2) of the present invention, the interval on the other end that is the opposite side of the second portion in the pair of third portions is larger than the interval on one end that is on the second portion side in the pair of third portions. Thus, when the storage device is inserted from the other end that is the opposite side of the second portion, the storage device rarely hits the pair of third portions. Therefore, it becomes possible to suppress damage of the third portion and the storage device, when the storage device is inserted.

In addition, the interval on one end that is the second portion side in the pair of third portions is smaller than the interval on the other end that is the opposite side of the second portion in the pair of third portions. Thus, as the storage device, which is inserted from the other end that is the opposite side of the second portion, is inserted, the position in the left-right direction with respect to the holding apparatus is restricted. Therefore, it becomes possible to reduce the positional deviation in the left-right direction of the storage device with respect to the holding apparatus.

According to the holding apparatus described in the above (3) of the present invention, after the storage device is inserted, the position of the storage device in the direction (for example, the left-right direction) that intersects the attaching and detaching direction and the vertical direction can be restricted by the protrusion portion. Therefore, after the storage device is inserted, the storage device can be positioned.

According to the holding apparatus described in the above (4) of the present invention, while performing the operation of attaching and detaching the storage device, the storage device is allowed to be moved also in the direction (for example, the left-right direction) that intersects the attaching and detaching direction and the vertical direction. Therefore, when the storage device is inserted, the storage device is hardly caught by the pair of third portions.

According to the holding apparatus described in the above (5) of the present invention, even when the first terminal of the storage device is attached to and detached from the second terminal of the holding apparatus, it becomes possible to suppress damage of the storage device, when the storage device is inserted.

### BRIEF DESCRIPTION OF DRAWINGS

[FIG. 1] A perspective view of a holding apparatus according to an embodiment.
[FIG. 2] A front view of the holding apparatus according to an embodiment.
[FIG. 3] A front view of a state in which the holding apparatus according to an embodiment holds a storage device.
[FIG. 4] A side view of a state in which the holding apparatus according to an embodiment holds the storage device.
[FIG. 5] A perspective view including a cross-section taken along line V-V of FIG. 2.
[FIG. 6] A view including a cross-section taken along line VI-VI of FIG. 2, and an explanatory view after the storage device is inserted.
[FIG. 7] An explanatory view of a fitting start position between a first terminal and a second terminal according to an embodiment.
[FIG. 8] An explanatory view of a fitting completion position between the first terminal and the second terminal according to an embodiment.

### DESCRIPTION OF EMBODIMENTS

Hereinafter, embodiments of the present invention will be described with reference to the drawings. In the following description, as an example of a holding device, description will be made with regard to a storage device holding device that holds a storage battery (a secondary battery) to be detachable, such as a battery as a storage device. Detachable encompasses attachable and detachable. Out of detachable modes, the holding device according to an embodiment has a detachable mode that does not necessitate a separate tool or the like for attachment or detachment. In the following description, expressions indicating relative or absolute arrangements, for example, "parallel", "orthogonal", "center", and "coaxial" not only strictly mean such arrangements but also include a state of being relatively displaced with a tolerance or an angle or a distance at which the same function is obtainable. In the drawings for use in the following description, the scale of each member is appropriately changed in order to make each member recognizable in size.

### <Holding Apparatus>

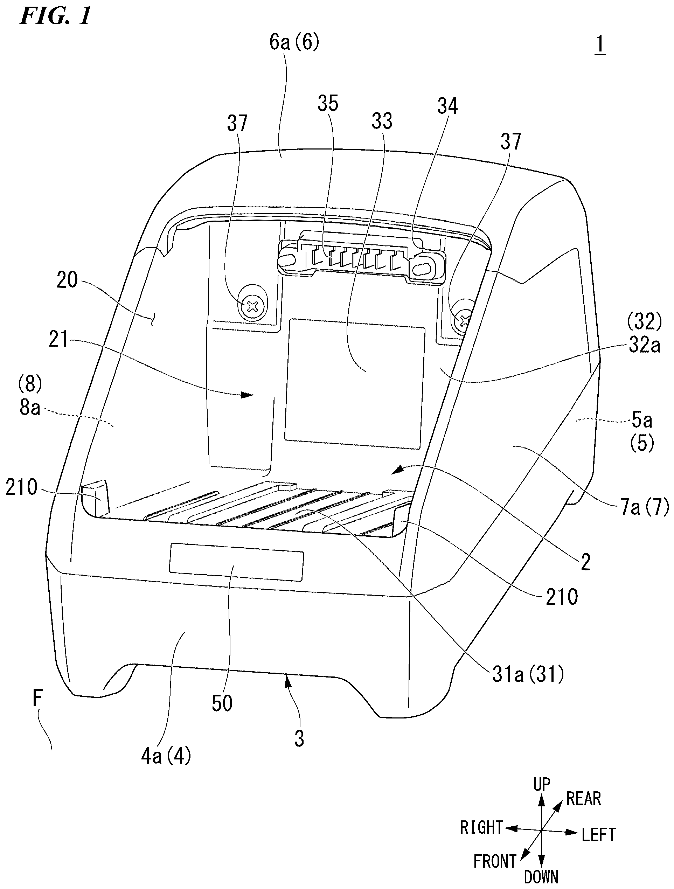

In FIGS. 1 to 6, a holding apparatus 1 includes: a holding portion 2, which holds a storage device 10 to be detachable; a bottom portion 3, which faces a placement surface F when the holding apparatus 1 is placed; a front portion 4 having a front surface 4a, which faces a front side of the holding apparatus 1; a rear portion 5 having a rear surface 5a, which faces a rear side of the holding apparatus 1; an upper portion 6 having an upper surface 6a, which faces an upper side of the holding apparatus 1; a left side portion 7 having a left surface 7a, which faces a left side of the holding apparatus 1; and a right side portion 8 having a right surface 8a, which faces a right side of the holding apparatus 1. In an embodiment, the placement surface F, on which the holding apparatus 1 is placed, is a flat ground or a floor surface (a horizontal surface). In the following description, three axial directions orthogonal to one another as illustrated in the drawings are defined as a front-rear direction, a left-right direction, and an up-down direction. The up-down direction will also be referred to as a vertical direction. A down side in the up-down direction corresponds to a gravity direction.

An opening portion 20 is formed in the holding apparatus 1 from the front portion 4 to the upper portion 6. An accommodation space 21 having a shape that conforms to an outer shape of the storage device 10 is formed inside the holding apparatus 1 through the opening portion 20. The accommodation space 21 is recessed from the upper portion 6 of the holding apparatus 1. The accommodation space 21 is made up of a plurality of surfaces (specifically, a bottom surface (an upper surface 31a of a first portion 31) and three side surfaces (inner side surfaces of the left and right side portions 7 and 8 and a front surface 32a of a second portion 32) that rise from left and right edge portions and a rear end portion of the bottom surface. Note that at least one of the three side surfaces may not necessarily be a flat surface.

The left side portion 7 and the right side portion 8 are formed so that upper ends are inclined to be higher from the front side toward the rear side (to be inclined rearward and upward). The length in the up-down direction of the accommodation space 21 also increases from the front side toward the rear side, and the rear side has the maximum length.

### <Storage Device>

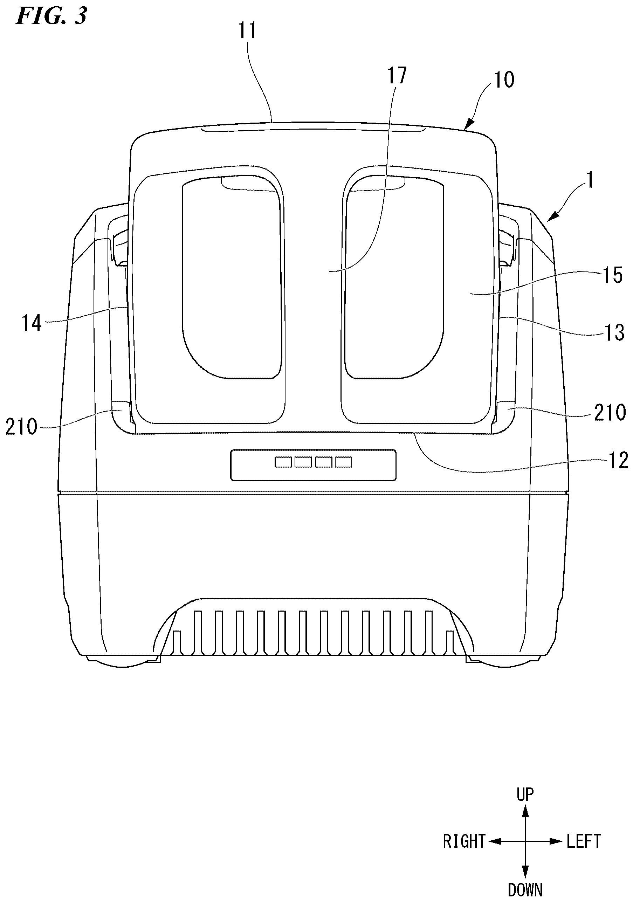

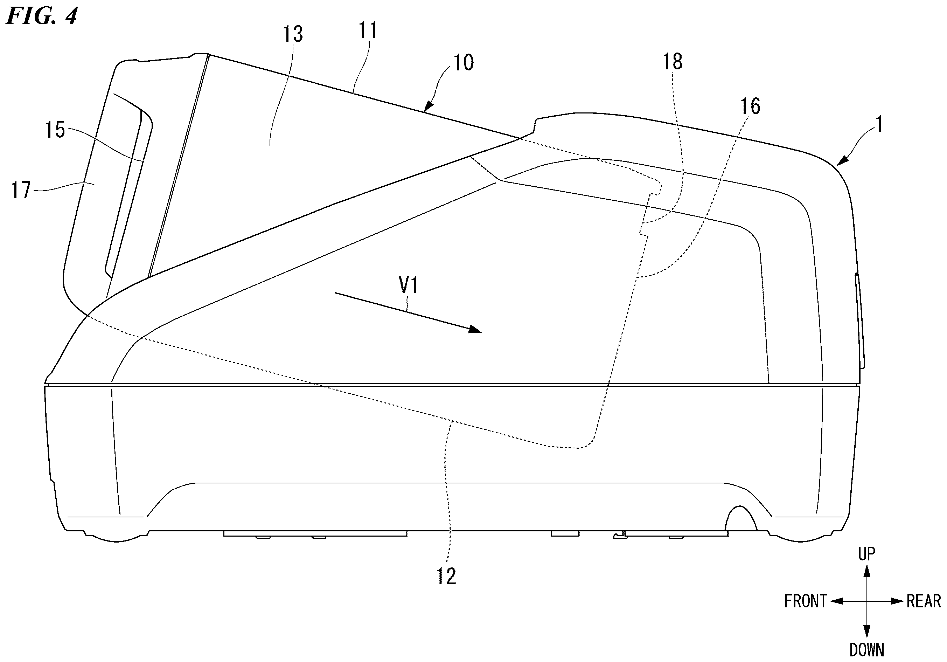

Referring also to FIGS. 3 and 4, the storage device 10 is constituted to be one unit of a single battery pack. For example, the storage device 10 is a lithium ion battery. For example, it is possible to use the storage device 10 as a power source of a traveling motor mounted on a two-wheeled or four-wheeled electric vehicle. Note that the storage device 10 is not limited to the above description, and can be used for various applications. For example, the storage device 10 may be applied to an electric instrument other than the electric vehicles.

The storage device 10 has a substantially rectangular parallelepiped shape as a whole. Hereinafter, the respective surfaces of the storage device 10 are defined as an upper surface 11, a lower surface 12, a left surface 13, a right surface 14, a front surface 15, and a rear surface 16 with an accommodated state of the storage device 10 in the holding apparatus 1 as a reference. The length in the left-right direction of the storage device 10 is substantially the same as the length in the left-right direction of the accommodation space 21. The length in the up-down direction of the storage device 10 is substantially the same as the maximum length in the up-down direction of the accommodation space 21. The length in the front-rear direction of the storage device 10 is substantially the same as the maximum length in the front-rear direction of the accommodation space 21.

The storage device 10 is accommodated in the accommodation space 21 through the opening portion 20. In the accommodated state of the storage device 10, the upper surface 11 and the front surface 15 of the storage device 10 are exposed from the holding apparatus 1. A handle 17 is provided on the front surface 15 of the storage device 10. For example, a user is able to carry the storage device 10 in a suspended state of holding the handle 17 with the rear surface 16 facing downward. The storage device 10 is capable of standing by itself with the rear surface 16 in contact with the ground or the floor surface.

A first terminal 18 is provided on an upper portion of the rear surface 16 of the storage device 10. For example, the first terminal 18 includes a plurality of metal terminals each having a substantially flat plate shape and disposed to be spaced apart from each other in the left-right direction. For example, the first terminal 18 is a receptacle (a female connector) having a recessed shape and extending in the left-right direction.

### <Holding Portion>

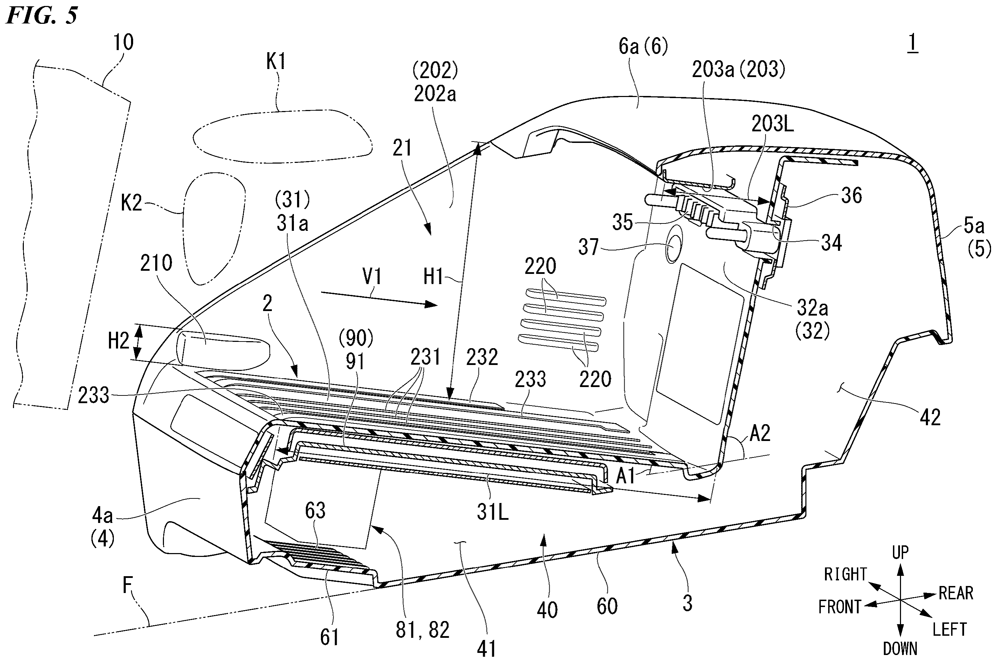

Referring also to FIG. 5, the holding portion 2 includes: a first portion 31, which holds the lower surface 12 of the storage device 10 (an example of a first surface that faces a first direction of the storage device 10); and a second portion 32, which holds the rear surface 16 of the storage device 10 (an example of a second surface that faces a second direction that intersects the first direction of the storage device 10). The holding portion 2 has a substantially letter L shape in a cross-sectional view as a whole. The lengths in the left-right direction of the first portion 31 and the second portion 32 are substantially the same as the length in the left-right direction of the accommodation space 21. The length in the front-rear direction of the first portion 31 is substantially the same as the length in the front-rear direction of the accommodation space 21. The length in the up-down direction of the second portion 32 is substantially the same as the maximum length in the up-down direction of the accommodation space 21.

The holding portion 2 is provided so that the storage device 10 is attached and detached in a direction V1 along the first portion 31. The lower surface 12 of the storage device 10 abuts the upper surface 31a of the first portion 31, when the storage device 10 is accommodated. The rear surface 16 of the storage device 10 abuts the front surface 32a of the second portion 32, when the storage device 10 is accommodated. The upper surface 31a of the first portion 31 is constituted to be smooth for the lower surface 12 of the storage device 10 to be smoothly slidable along the upper surface 31a. For example, a plurality of ribs or rails that extend in the front-rear direction and that are parallel to each other are provided to protrude on the upper surface of the first portion 31 so that a contact area between the upper surface 31a of the first portion 31 and the lower surface 12 of the storage device 10 is made small.

The first portion 31 and the second portion 32 extend in directions that obliquely intersect the bottom portion 3. The upper surface of the first portion 31 is inclined downward toward the rear side. The second portion 32 extends rearward and upward from the rear end portion of the first portion 31 at a substantially right angle with respect to the first portion 31.

In a cross-sectional view, a first defined angle A1 denotes a smallest angle among angles defined by the first portion 31 and the bottom portion 3. Specifically, the first defined angle A1 denotes the smallest defined angle among angles defined by the upper surface 31a of the first portion 31 and a surface parallel to the bottom portion main body 60 in the cross-sectional view. In the cross-sectional view, a second defined angle A2 denotes a smallest defined angle among the angles defined by the second portion 32 and the bottom portion 3. Specifically, the second defined angle A2 is the smallest defined angle among angles defined by the front surface 32a of the second portion 32 and a surface parallel to the bottom portion main body 60 in the cross-sectional view. The first defined angle A1 is smaller than the second defined angle A2.

Referring also to FIG. 1, a region 33 to which a label is attachable is provided on the front surface 32a of the second portion 32. A through hole 34, which penetrates the second portion 32 in the front-rear direction, is formed in an upper portion of the second portion 32. The through hole 34 extends in the left-right direction to correspond to the position of the first terminal 18 of the storage device 10. A second terminal 35 to be attachable to and detachable from the first terminal 18, which is provided on the storage device 10, is provided on an upper rear surface of the second portion 32.

Referring also to FIG. 5, for example, the second terminal 35 is attached to the second portion 32 with a fastening member such as a bolt 37 via a bracket 36. For example, first, the bracket 36 is disposed with a second terminal 35 fixed to the rear surface of the second portion 32. Next, the bolt 37 is fastened to a female screw portion (not illustrated) of the bracket 36 from the outside of the holding apparatus 1 (the front side of the second portion 32). This enables the second terminal 35 to be fixed to the second portion 32 via the bracket 36.

For example, the second terminal 35 includes a plurality of metal terminals each having a substantially flat plate shape and disposed to be spaced apart from each other in the left-right direction. For example, the second terminal 35 is a plug (a male connector) that extends in the left-right direction. The second terminal 35 protrudes forward (specifically, forward and upward) from the through hole 34. In the second terminal 35, a portion that protrudes forward from the through hole 34 is exposed all the time.

For example, the user pushes the storage device 10, which is accommodated in the accommodation space 21, in an arrow V1 direction along the upper surface of the first portion 31. Then, the plug (the second terminal 35) of the holding apparatus 1 is fitted with the first terminal 18 (the receptacle) of the storage device 10. This enables connection between the first terminal 18 and the second terminal 35.

### <Internal Space>

An internal space 40 is formed inside the holding apparatus 1, and the internal space 40 includes: a first space 41, which is defined by the first portion 31 and the bottom portion 3; and a second space 42, which is defined by the second portion 32 and the bottom portion 3, and which communicates with the first space 41.

The first space 41 is formed to be horizontally long. The length in the up-down direction of the first space 41 decreases toward the rear side. The maximum length in the front-rear direction of the first space 41 is longer than the maximum length in the up-down direction of the first space 41.

The second space 42 is formed to be vertically long. The maximum length in the up-down direction of the second space 42 is longer than the maximum length in the up-down direction of the first space 41. The maximum length in the front-rear direction of the second space 42 is shorter than the maximum length in the front-rear direction of the first space 41.

### <Front Portion>

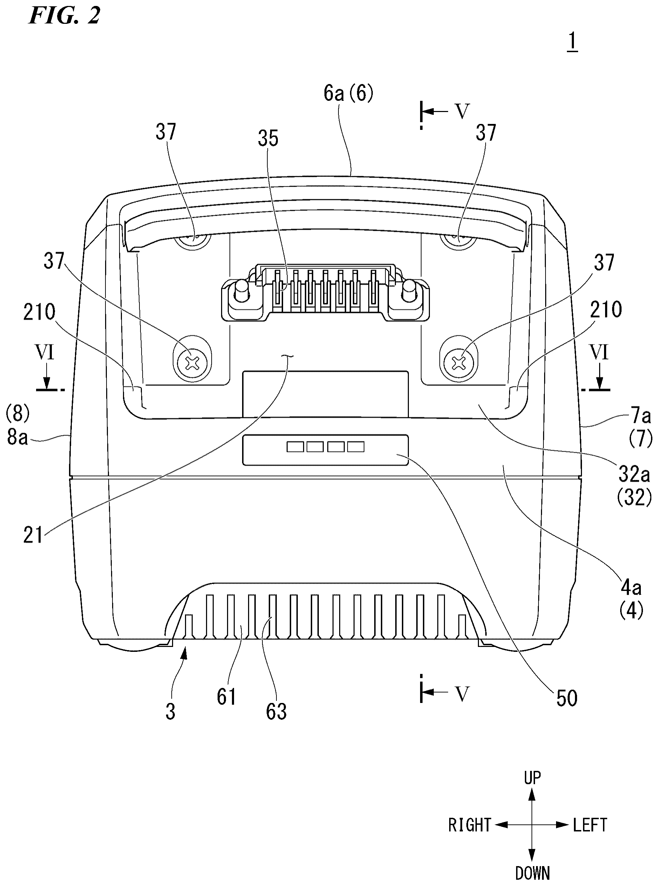

The front portion 4 is disposed to be lower than the holding portion 2, when viewed in the direction V1 along the first portion 31. The front portion 4 includes a front surface 4a, which faces the front side of the holding apparatus 1. A display 50 (see FIG. 2) such as an indicator is provided on the front surface 4a of the front portion 4. Note that the front surface 4a of the front portion 4 is not limited to facing forward in a substantially horizontal direction, and may be a surface that faces obliquely with respect to the horizontal direction.

### <Bottom Portion>

Referring also to FIG. 5, the bottom portion 3 includes: a bottom portion main body 60, which is disposed in parallel with the placement surface F when the holding apparatus 1 is placed; and a connection portion 61, which is provided to be connected with a lower end of the front portion 4 and to be spaced apart from the placement surface F.

The bottom portion main body 60 extends along the front-rear direction.

The connection portion 61 is inclined downward toward the rear side. In the connection portion 61, a first communication hole 63 is formed to allow an external space of the holding apparatus 1 and the first space 41 to communicate with each other. For example, the first communication hole 63 includes a plurality of slit-shaped intake ports that are spaced apart from each other in the left-right direction.

### <Rear Portion>

The rear portion 5 is disposed on an opposite side of the second portion 32 with respect to the second space 42. The rear portion 5 includes the rear surface 5a, which faces the rear side of the holding apparatus 1. The second space 42 is defined by the rear portion 5, in addition to the second portion 32 and the bottom portion 3.

### <Control Device and the like>

The holding apparatus 1 includes, in the first space 41: a power conversion device 81, which is provided to be capable of supplying electric power to and from the storage device 10 held in the holding portion 2; and a control device 82, which controls the power conversion device 81.

For example, the power conversion device 81 is an AC/DC inverter. For example, the power conversion device 81 converts AC power supplied from a power source (for example, system power) into DC power, and supplies the storage device 10 with the DC power.

For example, an AC power source outside the holding apparatus 1 is connected with the power conversion device 81. In this state, when the first terminal 18 of the storage device 10 is connected to the second terminal 35 of the holding apparatus 1, electric power is supplied to the storage device 10 via the power conversion device 81. The storage device 10 is charged, accordingly. Note that it is possible to constitute so that the electric power of the storage device 10 is supplied to the holding apparatus 1, when the first terminal 18 of the storage device 10 is connected to the second terminal 35 of the holding apparatus 1.

Although not illustrated, an electric terminal (a receptacle) to which a plug of an electric instrument, such as an AC power outlet, is connected may be provided in the upper portion 6 of the holding apparatus 1. For example, a DC/AC conversion inverter for converting DC power supplied from the storage device 10 into AC power and supplying the AC power to an electric instrument in connection with such an outlet may be provided inside the holding apparatus 1. In this case, the holding apparatus 1 has a function as a power feeder, in addition to the function as a charger.

The holding apparatus 1 includes a frame 90, which supports the power conversion device 81 and the control device 82, in the first space 41. The frame 90 includes a fixed surface portion 91 having a flat plate shape between the lower surface of the first portion 31, and the power conversion device 81 and the control device 82. For example, the power conversion device 81 and the control device 82 are attached to the fixed surface portion 91 with a fastening member such as a bolt. The power conversion device 81 and the control device 82 are fixed to the fixed surface portion 91 to be suspended from above. A gap is formed between a portion on which the first communication holes 63 are formed in the connection portion 61, and the power conversion device 81 and the control device 82.

### <Constitution of Holding Portion>

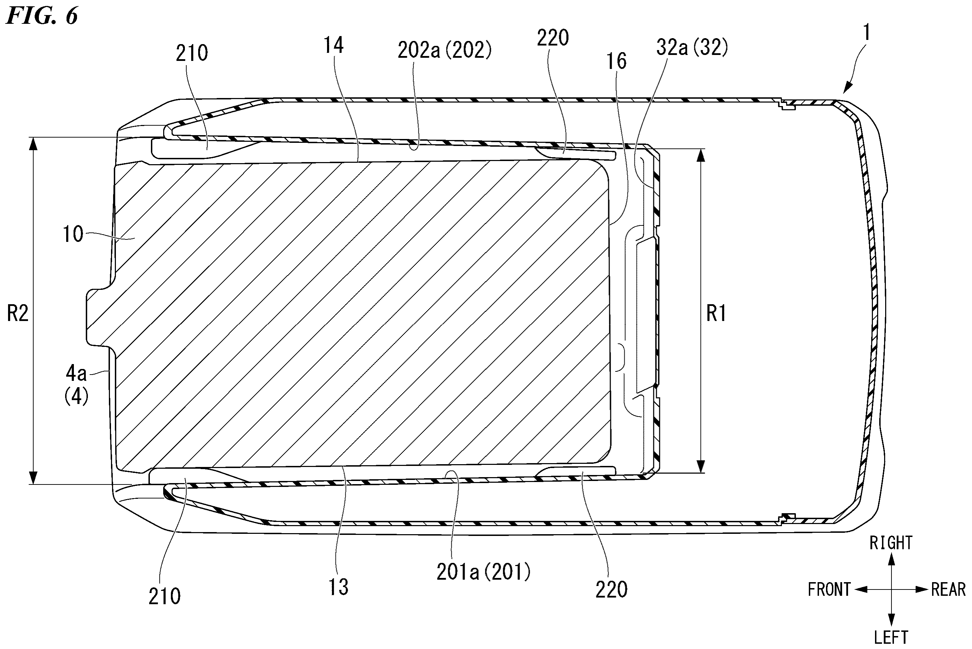

Referring also to FIGS. 5 and 6, the holding portion 2 detachably holds the storage device 10 along an attaching and detaching direction V1, which intersects the vertical direction. The attaching and detaching direction V1 corresponds to the direction V1 along the first portion 31. The holding portion 2 includes: the first portion 31 having a first surface 31a, which faces the vertical direction; the second portion 32 having a second surface 32a, which faces the horizontal direction; a pair of third portions 201 and 202 respectively having third surfaces 201a and 202a, which extend in a direction that intersects the first surface 31a and the second surface 32a; and a fourth portion 203 having a fourth surface 203a, which extends along the first surface 31a at a position that faces the first portion 31.

The first portion 31 corresponds to a part that holds the lower surface 12 of the storage device 10. The first surface 31a of the first portion 31 corresponds to the upper surface of the first portion 31, which faces the lower surface 12 of the storage device 10.

The second portion 32 corresponds to a part that holds the rear surface 16 of the storage device 10. The second surface 32a of the second portion 32 corresponds to the front surface of the second portion 32, which faces the rear surface 16 of the storage device 10.

One third portion 201 of the pair of third portions 201 and 202 corresponds to a part that holds the left surface 13 of the storage device 10. The third surface 201a of one third portion 201 corresponds to an inner side surface in the left-right direction of the third portion 201, the inner side surface facing the left surface 13 of the storage device 10.

The other third portion 202 of the pair of third portions 201 and 202 corresponds to a part that holds the right surface 14 of the storage device 10. The third surface 202a of the other third portion 202 corresponds to an inner side surface in the left-right direction of the third portion 202, the inner side surface facing the right surface 14 of the storage device 10.

The fourth portion 203 corresponds to a part that holds the upper surface 11 of the storage device 10. The fourth surface 203a of the fourth portion 203 corresponds to a lower surface of the fourth portion 203, which faces the upper surface 11 of the storage device 10.

The first portion 31 and the fourth portion 203 extend from the second portion 32 in the attaching and detaching direction V1. The first portion 31 and the fourth portion 203 extend forward and upward from the second surface 32a of the second portion 32. In the example of the drawing, the first portion 31 and the fourth portion 203 are disposed to be parallel to each other.

A length 203L of the fourth portion 203 in the attaching and detaching direction is shorter than a length 31L of the first portion 31 in the attaching and detaching direction. The length 203L of the fourth portion 203 in the attaching and detaching direction corresponds to an interval between the front end of the fourth portion 203 and the second surface 32a of the second portion 32 in the attaching and detaching direction V1. The length 31L of the first portion 31 in the attaching and detaching direction corresponds to an interval between the front end of the first portion 31 and the second surface 32a of the second portion 32 in the attaching and detaching direction V1.

In the example of the drawing, the length 203L of the fourth portion 203 in the attaching and detaching direction is equal to or shorter than a half of the length 31L of the first portion 31 in the attaching and detaching direction. The length 203L of the fourth portion 203 in the attaching and detaching direction is longer than a protrusion length of the second terminal 35 of the holding apparatus 1. The protrusion length of the second terminal 35 corresponds to an interval between a protrusion end (a front end) of the second terminal 35 and the second surface 32a of the second portion 32 in the attaching and detaching direction V1. Note that the length 203L of the fourth portion 203 in the attaching and detaching direction is not limited to the above description, and can be changed in accordance with a design specification.

In FIG. 6, with regard to the pair of third portions 201 and 202, an interval R2 on the other end that is on the opposite side of the second portion 32 in the pair of third portions 201 and 202 is larger than an interval R1 on one end that is the second portion 32 side in the pair of third portions 201 and 202 (R2 > R1). The interval R1 on one end corresponds to an interval in the left-right direction on the rear ends of the pair of third portions 201 and 202. The interval R2 on the other end corresponds to an interval in the left-right direction on the front ends of the pair of third portions 201 and 202.

In a horizontal cross-sectional view, the pair of third portions 201 and 202 enlarges toward the front side that is an inlet of the storage device 10. In the horizontal cross-sectional view, the interval between the pair of third portions 201 and 202 in the left-right direction gradually increases from the rear ends toward the front ends. In the horizontal cross-sectional view, an outer shape including the third surfaces 201a and 202a of the pair of third portions 201 and 202, the second surface 32a of the second portion 32, and the front surface 4a of the front portion 4 has a trapezoidal shape.

In FIG. 5, in the pair of third portions 201 and 202 (the other third portion 202 is illustrated in FIG. 5), a length H2 in the direction that intersects the first surface 31a and the fourth surface 203a on the opposite side of the second portion 32 in the pair of third portions 201 and 202 is shorter than a length H1 in the direction that intersects the first surface 31a and the fourth surface 203a on the second portion 32 side (H2 < H1). The length that intersects the first surface 31a and the fourth surface 203a on the second portion 32 side in the pair of third portions 201 and 202 corresponds to the length in the up-down direction on the rear ends of the pair of third portions 201 and 202. The length that intersects the first surface 31a and the fourth surface 203a on the opposite side of the second portion 32 in the pair of third portions 201 and 202 corresponds to the length in the up-down direction on the front ends of the pair of third portions 201 and 202.

The heights in the up-down direction (upper end positions) of the pair of third portions 201 and 202 gradually decrease from the rear ends toward the front ends. Upper end edges of the pair of third portions 201 and 202 are inclined frontward and downward, in a side view, to connect end portions in the left-right direction of a front edge of the upper portion 6 and end portions in the left-right direction of an upper edge of the front portion 4.

### <Front Protrusion Portion>

Referring also to FIGS. 5 and 6, both of the pair of third portions 201 and 202 have protrusion portions 210, which respectively protrude toward a side of an other of the pair of third portions 201 and 202 at positions on the other end that is on the opposite side of the second portion 32 in the pair of third portions 201 and 202. The protrusion portions 210 are respectively provided on the front side of both of the pair of third portions 201 and 202. Hereinafter, the protrusion portion 210 will also be referred to as a "front protrusion portion 210".

A plurality of front protrusion portions 210 are provided. In the example of the drawing, one front protrusion portion 210 is provided on each of the pair of third portions 201 and 202, and two front protrusion portions 210 in total are provided. Note that the installed number of the front protrusion portions 210 is not limited to the above description, and can be changed in accordance with a design specification.

The front protrusion portions 210 respectively protrude inward in the left-right direction from the front ends of the third surfaces 201a and 202a of the pair of third portions 201 and 202. The front protrusion portion 210 extends along the attaching and detaching direction V1. The front protrusion portion 210 extends rearward from the upper end of the front portion 4 along an outer edge in the left-right direction of the first surface 31a of the first portion 31. The inner side surface in the left-right direction of the front protrusion portion 210 extends along the front-rear direction from the front end toward the rear in a top view, and then extends obliquely to be positioned on an outer side in the left-right direction toward the rear.

### <Rear Protrusion Portion>

Both of the pair of third portions 201 and 202 include rear protrusion portions 220, which respectively protrude toward a side of an other of the pair of third portions 201 and 202 at positions on one end that is the second portion 32 side in the pair of third portions 201 and 202. The rear protrusion portions 220 are provided on the rear side of both of the pair of third portions 201 and 202.

A plurality of rear protrusion portions 220 are provided. In the example of the drawing, four rear protrusion portions 220 are provided on each of the pair of third portions 201 and 202, and eight rear protrusion portions 220 in total are provided (in FIG. 5, four rear protrusion portions provided on the other third portion 202 are illustrated). Note that the installed number of the rear protrusion portions 220 is not limited to the above description, and can be changed in accordance with a design specification.

The rear protrusion portions 220 respectively protrude inward in the left-right direction from the rear ends of the third surfaces 201a and 202a of the pair of third portions 201 and 202. The rear protrusion portion 220 extends along the attaching and detaching direction V1. The plurality of rear protrusion portions 220 are provided to be spaced apart from one another in the up-down direction. In the example of the drawing, the lengths of the plurality of rear protrusion portions 220 in the direction along the attaching and detaching direction V1 are the same with one another. Note that the lengths of the plurality of rear protrusion portions 220 in the direction along the attaching and detaching direction V1 are not limited to the above description, and can be changed in accordance with a design specification.

A rear end of the rear protrusion portion 220 is disposed on the front side relative to the second surface 32a of the second portion 32. A lower end of the rear protrusion portion 220 is disposed on an upper side than the first surface 31a of the first portion 31. The rear protrusion portions 220 are partially provided at the same height position as the front protrusion portion 210 in the up-down direction. The inner side surface in the left-right direction of the rear protrusion portion 220 extends along the front-rear direction from the rear end toward the front in a top view, and then extends obliquely to be positioned on an outer side in the left-right direction toward the front.

### <Bottom Protrusion Portion>

In FIG. 5, the first portion 31 includes bottom protrusion portions 231, 232, and 233, which protrude toward the fourth portion 203. The bottom protrusion portions 231, 232, and 233 include: a first bottom protrusion portion 231, which extends in the front-rear direction at a position of the center in the left-right direction of the first surface 31a of the first portion 31; a second bottom protrusion portion 232, which extends to a partway position in the front-rear direction at a position on an outer end in the left-right direction of the first surface 31a of the first portion 31; and a third bottom protrusion portion 233, which extends in the front-rear direction at a position between the first bottom protrusion portion 231 and the second bottom protrusion portion 232 on the first surface 31a of the first portion 31.

The first bottom protrusion portion 231 protrudes upward from the front end to the rear end on the first surface 31a at the position of the center in the left-right direction of the first surface 31a of the first portion 31. A plurality of first bottom protrusion portions 231 are provided. In the example of the drawing, three first bottom protrusion portions 231 are provided to extend in the front-rear direction in parallel with one another. Note that the installed number of the first bottom protrusion portions 231 is not limited to the above description, and can be changed in accordance with a design specification.

The second bottom protrusion portion 232 protrudes upward at a position on the outer end side in the left-right direction of the first surface 31a of the first portion 31, from the front end of the first surface 31a to a partway position in the front-rear direction. The length of the second bottom protrusion portion 232 in the front-rear direction is shorter than the length of the first bottom protrusion portion 231 in the front-rear direction. The width of the second bottom protrusion portion 232 in the left-right direction is larger than the width of the first bottom protrusion portion 231 in the left-right direction. In the example of the drawing, one second bottom protrusion portion 232 is provided to extend in the front-rear direction in parallel with each other on each side in the left-right direction, and two second bottom protrusion portions 232 in total are provided (in FIG. 5, one on the right side is illustrated). Note that the installed number of the second bottom protrusion portions 232 is not limited to the above description, and can be changed in accordance with a design specification.

The third bottom protrusion portion 233 protrudes upward from the front end to the rear end of the first surface 31a at a position between the first bottom protrusion portion 231 and the second bottom protrusion portion 232 of the first surface 31a of the first portion 31. The length of the third bottom protrusion portion 233 in the front-rear direction is substantially the same as the length of the first bottom protrusion portion 231 in the front-rear direction. The third bottom protrusion portion 233 extends from the front end to the rear end on the first surface 31a, and then bends inward in the left-right direction in a top view. The third bottom protrusion portion 233 has a letter L shape in the top view. In the example of the drawing, one third bottom protrusion portion 233 is provided on each side in the eft-right direction, and two third bottom protrusion portions 233 in total are provided. Note that the installed number of third bottom protrusion portions 233 is not limited to the above description, and can be changed in accordance with a design specification.

### <Operation by Constitution of Holding Portion>

In FIG. 5, for example, in a case where the length 203L of the fourth portion 203 in the attaching and detaching direction is the same as the length 31L of the first portion 31 in the attaching and detaching direction, it is impossible to move the storage device 10 in the up-down direction in an encircled portion K1 in FIG. 5, because the fourth portion 203 is present to the vicinity of the encircled portion K1 in FIG. 5. On the other hand, according to the present constitution, the length 203L of the fourth portion 203 in the attaching and detaching direction is shorter than the length 31L of the first portion 31 in the attaching and detaching direction, so that the storage device 10 is allowed to be moved in the up-down direction in the encircled portion K1 in the drawing.

For example, in a case where the length H1 in the up-down direction on the rear end of the pair of third portions 201 and 202 is the same as the length H2 in the up-down direction on the front end of the pair of third portions 201 and 202, it is difficult to move the storage device 10 in the left-right direction in an encircled portion K2 in the drawing, because the pair of third portions 201 and 202 are present to the vicinity of the encircled portion K2 in the drawing. On the other hand, according to the present constitution, the length H2 in the up-down direction on the front end of the pair of third portions 201 and 202 is shorter than the length H1 in the up-down direction on the rear end of the pair of third portions 201 and 202. Thus, it is easy to move the storage device 10 in the left-right direction in the encircled portion K2 in the drawing. Therefore, the storage device 10 is hardly caught by the pair of third portions 201 and 202(in other words, left and right wall portions).

For example, in a case where the first surface 31a of the first portion 31 and the third surfaces 201a and 202a of the pair of third portions 201 and 202 are each constituted of only a flat surface, after the storage device 10 is inserted, each surface of the storage device 10 and each surface of each portion of the holding portion 2 are at least partially brought into surface contact. On the other hand, according to the present constitution, the bottom protrusion portions 231, 232, and 233 are provided on the first surface 31a of the first portion 31, and the front protrusion portion 210 and the rear protrusion portion 220 are provided on the third surfaces 201a and 202a of the pair of third portions 201 and 202. Therefore, after the storage device 10 is inserted, the contact area between each surface of the storage device 10 and each surface of each portion of the holding portion 2 can be reduced as much as possible. Therefore, the storage device 10 can be more smoothly moved in the attaching and detaching direction V1.

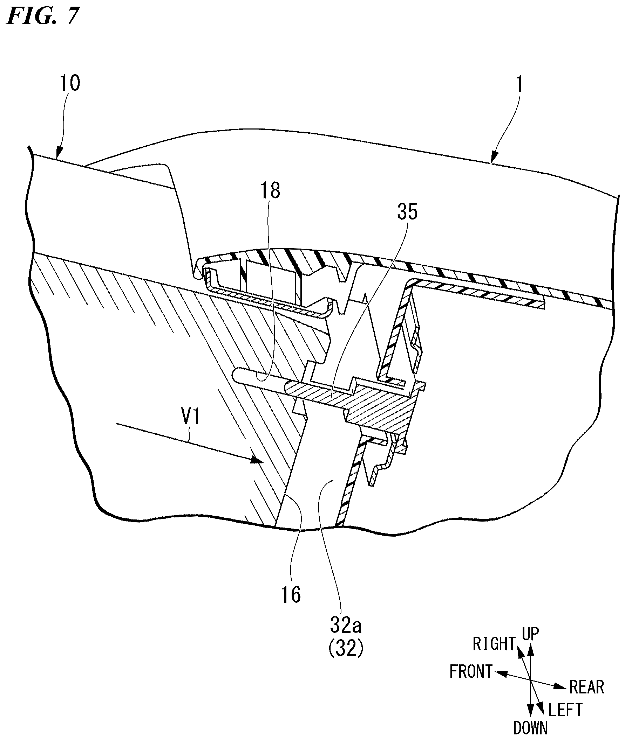

Referring also to FIG. 7, for example, after the storage device 10 is inserted, the storage device 10 is guided by the above protrusion portions 210, 220, 231, 232, and 233, and is moved to a fitting start position of the first terminal 18 and the second terminal 35. In the fitting start position, the plug (the second terminal 35) of the holding apparatus 1 is located at a relative position to be capable of fitting into the first terminal 18 (the receptacle) of the storage device 10. In other words, at the fitting start position, the positional deviation of the storage device 10 falls within an allowable value.

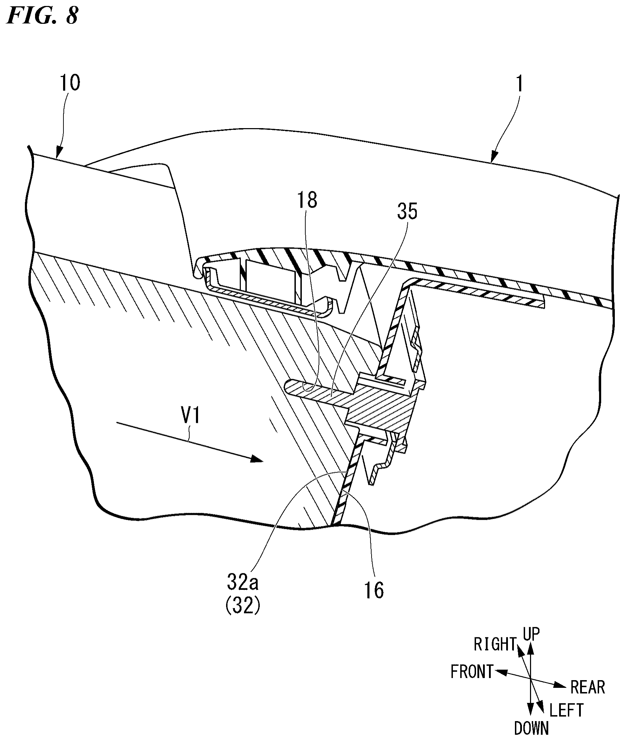

Referring also to FIG. 8, then, when the storage device 10 is further inserted, the storage device 10 advances to a fitting completion position of the first terminal 18 and the second terminal 35. The fitting completion position denotes a position where the fitting of the plug (the second terminal 35) of the holding apparatus 1 into the first terminal 18 (the receptacle) of the storage device 10 is completed. For example, in the fitting completion position, the rear surface 16 of the storage device 10 abuts the second surface 32a of the second portion 32.

### <Operation and Effects>

As described heretofore, the holding apparatus 1 in the above embodiment includes the holding portion 2, which detachably holds the storage device 10 along the attaching and detaching direction V1, which intersects the vertical direction. The holding portion 2 includes: the first portion 31 having a first surface 31a, which faces the vertical direction; the second portion 32 having a second surface 32a, which faces the horizontal direction; a pair of third portions 201 and 202 respectively having third surfaces 201a and 202a, which extend in a direction that intersects the first surface 31a and the second surface 32a; and a fourth portion 203 having a fourth surface 203a, which extends along the first surface 31a at a position that faces the first portion 31. The first portion 31 and the fourth portion 203 extend from the second portion 32 in the attaching and detaching direction V1. The length 203L of the fourth portion 203 in the attaching and detaching direction is shorter than the length 31L of the first portion 31 in the attaching and detaching direction.

According to this constitution, the length 203L of the fourth portion 203 in the attaching and detaching direction is shorter than the length 31L of the first portion 31 in the attaching and detaching direction, and thus the storage device 10 is allowed to be moved also in the direction (for example, the up-down direction) that intersects the attaching and detaching direction V1 and the horizontal direction while performing the operation of attaching and detaching the storage device 10. Therefore, it becomes possible to suppress damage of the storage device 10, when the storage device 10 is inserted.

In addition, it is possible to take in and out the storage device 10 obliquely along the first portion 31, so that the user can easily attach and detach the storage device 10. In addition, the structure disclosed in Patent Document 1 (the structure for rotatably supporting the holder in the housing) is no longer necessitated. Therefore, the storage device 10 can be easily held with a simple constitution.

In the above embodiment, the interval R2 on the other end that is the opposite side of the second portion 32 in the pair of third portions 201 and 202 is larger than the interval R1 on one end that is the second portion 32 side in the pair of third portions 201 and 202 (R2 > R1).

According to this constitution, the interval R2 on the other end that is the opposite side of the second portion 32 in the pair of third portions 201 and 202 is larger than the interval R1 on one end that is the second portion 32 side in the pair of third portions 201 and 202 (R2 > R1). Thus, when the storage device 10 is inserted from the other end that is the opposite side of the second portion 32, the storage device 10 rarely hits the pair of third portions 201 and 202. Therefore, it becomes possible to suppress damage of the third portion 201 and 202 or the storage device 10, when the storage device 10 is inserted.

In addition, the interval R1 on one end that is the second portion 32 side in the pair of third portions 201 and 202 is smaller than the interval R2 on the other end that is the opposite side of the second portion 32 in the pair of third portions 201 and 202 (R1 < R2). Thus, as the storage device 10, which is inserted from the other end that is the opposite side of the second portion 32, is inserted, the position in the left-right direction with respect to the holding apparatus 1 is restricted. Therefore, it becomes possible to reduce the positional deviation in the left-right direction of the storage device 10 with respect to the holding apparatus 1.

In the above embodiment, both of the pair of third portions 201 and 202 include, at positions on the other end, the protrusion portions 210, which respectively protrude toward a side of an other of the pair of third portions 201 and 202.

According to this constitution, after the storage device 10 is inserted, the position of the storage device 10 in the direction (for example, the left-right direction) that intersects the attaching and detaching direction V1 and the vertical direction can be restricted by the protrusion portions 210. Therefore, after the storage device 10 is inserted, the storage device 10 can be positioned.

In the above embodiment, the length H2 in the direction that intersects the first surface 31a and the fourth surface 203a on the opposite side of the second portion 32 in the pair of third portions 201 and 202 is shorter than the length H1 in the direction that intersects the first surface 31a and the fourth surface 203a on the second portion 32 side in the pair of third portions 201 and 202 (H2 < H1).

According to this constitution, while performing the operation of attaching and detaching the storage device 10, the storage device 10 is allowed to be moved also in the direction (for example, the left-right direction) that intersects the attaching and detaching direction V1 and the vertical direction. Therefore, when the storage device 10 is inserted, the storage device 10 is hardly caught by the pair of third portions 201 and 202.

In the above embodiment, the holding apparatus 1 includes the second terminal 35 to be attachable to and detachable from the first terminal 18, which is provided on the storage device 10. In the storage device 10 being attached to and detached from the holding portion 2, the first terminal 18 is attached to and detached from the second terminal 35.

According to this constitution, even when the first terminal 18 of the storage device 10 is attached to and detached from the second terminal 35 of the holding apparatus 1, it becomes possible to suppress damage of the storage device 10, when the storage device 10 is inserted.

In the present embodiment, as the storage device 10, which is inserted from the other end that is the opposite side of the second portion 32, is inserted, the position of the storage device 10 in the left-right direction with respect to the holding apparatus 1 is restricted. Thus, the attached and detached position of the first terminal 18 of the storage device 10 with respect to the second terminal 32 of the holding apparatus 1 is also restricted. Therefore, it becomes possible to reduce the positional deviation in the left-right direction of the first terminal 18 of the storage device 10 with respect to the second terminal 32 of the holding apparatus 1.

### <Modifications>

In the above embodiment, the description has been made with regard to an example in which the interval on the other end that is the opposite side of the second portion in the pair of third portions is larger than the interval on one end that is the second portion side in the pair of third portions, but the present invention is not limited to this. For example, the interval on one end that is the second portion side in the pair of third portions may be larger than the interval on the other end that is the opposite side of the second portion in the pair of third portions. For example, the interval between the pair of third portions can be changed in accordance with a design specification.

In the above embodiment, the description has been made with regard to an example in which both of the pair of third portions include, at the positions on the other end, the protrusion portions that protrude toward a side of an other of the pair of third portions, but the present invention is not limited to this. For example, the protrusion portion may be provided on one of the pair of third portions, and may not necessarily be provided on the other one. For example, the protrusion portion may be provided on at least one of the pair of third portions. For example, none of the pair of third portions may necessarily include the protrusion portion. For example, the installed mode of the protrusion portion can be changed in accordance with a design specification.

In the above embodiment, the description has been made with regard to an example in which the length in the direction that intersects the first surface and the fourth surface on the opposite side of the second portion in the pair of third portions is shorter than the length in the direction that intersects the first surface and the fourth surface on the second portion side in the pair of third portions, but the present invention is not limited to this. For example, the length in the direction that intersects the first surface and the fourth surface on the second portion side in the pair of third portions may be equal to or shorter than the length in the direction that intersects the first surface and the fourth surface on the opposite side of the second portion in the pair of third portions. For example, the lengths of the pair of third portions can be changed in accordance with a design specification.

In the above embodiment, the description has been made with regard to an example in which the holding apparatus includes the second terminal attachable to and detachable from the first terminal provided on the storage device, and the first terminal is attached to and detached from the second terminal, in the storage device being attached to and detached from the holding portion, but the present invention is not limited to this. For example, the first terminal may be attached to and detached from the second terminal, in any case other than the case where the storage device is attached to and detached from the holding portion. For example, at least one of the first terminal and the second terminal may be constituted to be driven to move forward and rearward by an actuator or the like separately provided. For example, the mode in which the first terminal is attached to and detached from the second terminal can be changed in accordance with a design specification.

In the above embodiment, the description has been made with regard to an example in which the first portion and the second portion extend in directions that obliquely intersect the bottom portion, but the present invention is not limited to this. For example, one of the first portion and the second portion may extend in parallel with the bottom portion. In this case, it is possible to take in and out the storage device horizontally along the first portion or the second portion. For example, the disposed mode of the first portion and the second portion can be changed in accordance with a design specification.

In the above embodiment, the description has been made with regard to an example in which the first defined angle, which is the smallest defined angle among the angles defined by the first portion and the bottom portion, is smaller than the second defined angle, which is the smallest defined angle among the angles defined by the second portion and the bottom portion, but the present invention is not limited to this. For example, the first defined angle may be an angle equal to or larger than the second defined angle. For example, the magnitude relationship between the first defined angle and the second defined angle can be changed in accordance with a design specification.

In the above embodiment, the description has been made with regard to an example in which the plug (the second terminal) to be connectable with the receptacle (the first terminal) of the storage device is provided on the holding apparatus, but the present invention is not limited to this. For example, the receptacle may be provided on the holding apparatus, and in addition, the plug to be fitted with the receptacle may be provided on the storage device. For example, the constitution mode of the first terminal and the second terminal can be changed in accordance with a design specification.

In the above embodiment, the description has been made with regard to an example in which the holding apparatus includes one holding portion that holds a single storage device, but the present invention is not limited to this. For example, the holding apparatus may include a plurality of holding portions that are constituted to be capable of simultaneously holding a plurality of storage devices. For example, the plurality of holding apparatuses may be disposed to be aligned in at least one of the left-right direction and the up-down direction, and may hold a plurality of storage devices simultaneously. For example, the holding mode that the holding apparatus holds the storage device can be changed in accordance with a design specification.

In the above embodiment, the description has been made with regard to, as an example of the holding apparatus, a charger that supplies the battery with electric power from the outside, but the holding apparatus is not limited to this. For example, the holding apparatus may be a power feeder that supplies electric power of the battery to the outside. For example, the holding apparatus may be a power feeder without a charging function. For example, the holding apparatus may be applied to a battery mount portion of an electric power utilization apparatus that utilizes the electric power of the battery. For example, the application mode of the holding apparatus can be changed in accordance with a design specification.

In the above embodiment, the description has been made with regard to, as an example of the holding apparatus, a storage device holding apparatus that holds a storage device (a secondary battery) such as a battery as the storage device to be detachable, but the holding apparatus is not limited to this. For example, the holding apparatus may hold a capacitor as the storage device. For example, the storage device is not limited to the battery, and may be any other electric power storage device such as the capacitor. For example, the storage device to which the present invention is applied can be changed in accordance with a design specification.

Heretofore, the modes for carrying out the present invention have been described using the embodiments, but the present invention is not limited to the embodiments described above, and various modifications and substitutions can be made without departing from the gist of the present invention.

### REFERENCE SIGNS LIST

1 Holding apparatus
2 Holding portion
10 Storage device
18 First terminal
31 First portion
31a Upper surface (first surface) of first portion
31L Length of first portion in attaching and detaching direction
32 Second portion
32a Front surface of second portion (second surface)
35 Second terminal
201 One third portion
201a Inner side surface in left-right direction of one third portion (third surface of one third portion)
202 The other third portion
202a Inner side surface in left-right direction of the other third portion (third surface of the other third portion)
203 Fourth portion
203L Length of fourth portion in attaching and detaching direction
203a Lower surface of fourth surface (fourth surface)
210 Front protrusion portion (protrusion portion)
H1 Length in up-down direction of rear ends of pair of third portions (length in direction that intersects first surface and fourth surface on second portion side in pair of third portions)
H2 Length in up-down direction of front ends of pair of third portions (length in direction that intersects first surface and fourth surface on opposite side of second portion in pair of third portions)
R1 Interval in left-right direction between rear ends of pair of third portions (interval of one end that is second portion side in pair of third portions)
R2 Interval in left-right direction between front ends of pair of third portions (interval of the other end that is opposite side of second portion in pair of third portions)
V1 Arrow (attaching and detaching direction)

## Claims

1. A holding apparatus comprising a holding portion which detachably holds a storage device along an attaching and detaching direction which intersects a vertical direction, wherein
the holding portion includes:
a first portion having a first surface which faces the vertical direction;
a second portion having a second surface which faces a horizontal direction;
a pair of third portions each having a third surface extending in a direction which intersects the first surface and the second surface; and
a fourth portion having a fourth surface extending along the first surface at a position which faces the first portion,
the first portion and the fourth portion extend in the attaching and detaching direction from the second portion, and
a length of the fourth portion in the attaching and detaching direction is shorter than a length of the first portion in the attaching and detaching direction.

2. The holding apparatus according to claim 1, wherein
an interval on the other end which is an opposite side of the second portion in the pair of third portions is larger than an interval on one end which is a second portion side in the pair of third portions.

3. The holding apparatus according to claim 2, wherein
at least one of the pair of third portions includes, at a position on the other end, a protrusion portion which protrudes toward a side of an other of the pair of third portions.

4. The holding apparatus according to one of claims 1 to 3, wherein
a length in a direction which intersects the first surface and the fourth surface on an opposite side of the second portion in the pair of third portions is shorter than a length in a direction which intersects the first surface and the fourth surface on a second portion side in the pair of third portions.

5. The holding apparatus according to one of claims 1 to 4, further comprising
a second terminal attachable to and detachable from a first terminal provided on the storage device, wherein
the first terminal is attached to and detached from the second terminal, in the storage device being attached to and detached from the holding portion.
